# EUROPÄISCHE PATENTSCHRIFT

(11) **EP 0 944 515 B1**
(45) Veröffentlichungstag und Bekanntmachung des Hinweises auf die Patenterteilung: **13.06.2001**
(21) Anmeldenummer: 97911220.8
(22) Anmeldetag: 14.10.1997
(51) Int. Cl.: B62D 15/02, B60R 16/02

(54) **MIT EINEM RESOLVER VERSEHENE MESSEINRICHTUNG ZUR MESSUNG DES LENKWINKELS EINES FAHRZEUGS**
MEASURING ARRANGEMENT PROVIDED WITH A RESOLVER FOR MEASURING A VEHICLE STEERING ANGLE
DISPOSITIF DE MESURE MUNI D'UN RESOLVEUR, SERVANT A MESURER L'ANGLE DE BRAQUAGE D'UN VEHICULE

(30) Priorität: 19.12.1996 DE 19652935
(43) Veröffentlichungstag der Anmeldung: 29.09.1999
(73) Patentinhaber: Valeo Schalter und Sensoren GmbH, 74321 Bietigheim-Bissingen (DE)
(72) Erfinder: BENZ, Jürgen, D-74354 Besigheim (DE); HÖHLER, Christian, D-71732 Tamm (DE); SCHLEGEL, Michael, D-71720 Oberstenfeld (DE); NIES, Jürgen, D-75181 Pforzheim (DE)
(74) Vertreter: Dreiss, Fuhlendorf, Steimle & Becker
(86) Internationale Anmeldenummer: EP9705654
(87) Internationale Veröffentlichungsnummer: WO9826973

(56) Entgegenhaltungen:
- DE-A- 4 006 683
- US-A- 4 783 626
- WYSS W: "NEUARTIGE, INDUKTIVE DREHWINKELSENSOREN FUR AC-SERVOMOTOREN" ANTRIEBSTECHNIK, Bd. 33, Nr. 7, 1.Juli 1994, Seite 28/29 XP000454797 in der Anmeldung erwähnt

## Beschreibung

Zur Dynamikregelung von Fahrzeugen ist die Messung des Lenkwinkels bzw. der Lenkwinkeländerung eines Fahrzeugs von großer Bedeutung. Zur Ermittlung des Lenkradwinkels, der dem Lenkwinkel entspricht, können verschiedene Meßprinzipien angewandt werden. Zu den digitalen optischen Verfahren zählen die diskreten Sende- und Empfangsbausteine sowie Charge-Couplet-Device-Bausteine. Im Bereich der magnetsensitiven Bauelemente sind Hall- und MR-Elemente zu nennen. Aus der Zeitschrift Antriebstechnik, Jahrgang 33 (1994) ist in dem Heft Nr. 7 auf den Seiten 28,29 als ein weiterer Drehwinkelsensor ein Resolver beschrieben, der für die Zwecke des Maschinenbaus für Werkzeuge, Roboter, Druckereimaschinen, Verpackungsmaschinen und ähnliches einsetzbar ist.

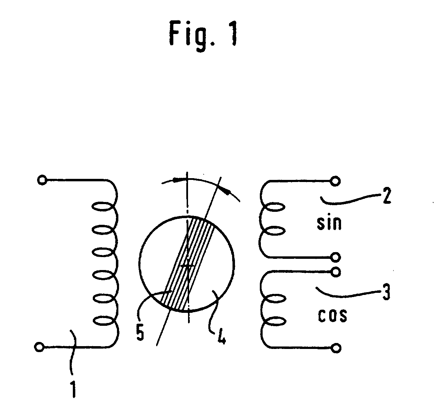

Resolver bestehen im Prinzip aus einem Rotor und einem Stator (siehe Fig. 1). Auf dem Rotor wird ein sinusförmiges Magnetfeld erzeugt, das sich mit dem Rotor dreht. Dieses Feld induziert Spannungen in den zwei Phasenwicklungen (sekundäre Statorwicklung), die von der Drehlage des Rotors abhängig sind. Um ein Sinussignal und ein Kosinussignal zu erhalten, sind die zwei Phasenwicklungen auf dem Stator um 90 Grad verschoben. Bei dem klassischen Resolver erfolgt die Übertragung der elektrischen Energie mit Hilfe eines Kopplungstransformators. Dieser besteht aus zwei konzentrischen Wicklungen, von denen die eine, die Primärwicklung, im Gehäuse des Stators eingebaut ist, die andere, die Sekundärwicklung, befindet sich auf dem Rotor, mit dem sie sich dreht. Die Sekundärwicklung speist die sinuserzeugende Wicklung über zwei Leitungen auf dem Rotor. Neuere Entwicklungen kommen ohne Schleifkontakte aus. Genaueres hierzu in dem oben genannten Aufsatz.

Aufgabe der Erfindung ist es, eine neuartige Meßeinrichtung zur Messung des Lenkwinkels eines Fahrzeugs anzugeben, welche sowohl den absoluten Drehwinkel anzugeben vermag, als auch in ihrem Aufbau sehr robust ist. Die Erfindung geht daher aus von einer Meßeinrichtung der sich aus dem Oberbegriff des Anspruchs 1 ergebenden Gattung. Die Aufgabe wird durch die sich aus dem kennzeichnenden Teil des Anspruchs 1 ergebende Merkmalskombination gelöst. Die Erfindung besteht im Prinzip also darin, zur Messung des Lenkwinkels bzw. der Lenkwinkeländerung eines Fahrzeugs einen Resolver der oben beschriebenen Art anzuwenden. Wie aus Fig. 1 ersichtlich, enthält der Resolver einen Stator mit drei Wicklungen. Es handelt sich dabei um eine Erregerwicklung als Primärwicklung und zwei um 90 Grad gegeneinander verschobenen Sekundärwicklungen. Je nach Resolvertyp ist der Rotor mit einer Hilfswicklung oder mit Magnetwerkstoffen ausgestattet. Über die zusätzlich erforderliche Auswerteelektronik, die beispielsweise von der Firma Analog Devices als in einem Chip integriert bezogen werden kann, wird mit Einprägung einer konstanten Frequenz, z.B. 10 kHz und Auswertung der in den beiden um 90 Grad versetzten Sekundärwicklungen induzierten Spannung der Absolutwert des Drehwinkels bestimmt.

Die Verwendung eines Resolvers in der Meßeinrichtung bietet eine ganze Reihe von Vorteilen. So ist zum einen die Absolutwinkelerkennung zwischen 0 und 360° möglich. Die Meßwerte können ohne Schwierigkeiten auf 13 Bit genau angegeben werden, das entspricht einer 0,05° Auflösung. Der verwendete Resolver ist weiterhin störunfällig gegenüber Temperatur, Schmutz, Stöße und hat eine gute EMV. Weiterhin sind die mechanischen Abmessungen des Resolvers gut an die in einem Fahrzeug herrschenden Anforderungen anpaßbar.

Ebenso wie dies bereits im Zusammenhang mit anderen Lenkwinkelsensoren beschrieben wurde, ist auch der erfindungsgemäße Lenkwinkelsensor in den Lenkstockschalter integrierbar. Es ist hierzu nur notwendig, daß der Rotor mit der drehbaren Lenksäule und der Stator mit dem Mantelrohr der Lenksäule fest gekoppelt wird.

Die erfindungsgemäße Meßeinrichtung gibt dabei eine zusätzliche Option, die mit Hilfe der Anwendung der in Anspruch 2 aufgeführten Merkmale erzielbar ist. Im Prinzip geht es darum, eine berührungslose Signalübertragung im allgemeinsten Sinne zwischen chassisfest in dem Fahrzeug eingebauten Einrichtungen und in Verbindung mit dem Lenkrad drehbaren Einrichtungen zu schaffen. Hierzu wurden bisher spezielle Drehverbinder angewendet, die die Signale über Spiralfedern oder spiralförmig aufgewickelte Flachbandkabel, sog. Wickelfedern, zwischen Lenkrad und den chassisfesten Geräten übertrugen. Auch eine schleifende Kontaktgabe wurde im Zusammenhang mit der genannten Signalübertragung eingesetzt. Entsprechend der vorteilhaften Weiterbildung nach Anspruch 2 macht sich die vorliegende Erfindung nun die Tatsache zunutze, daß zwischen dem mit dem Lenkrad verbundenen Rotor und dem Stator eine induktive Kopplung vorgegeben ist. Es ist somit möglich, über diese induktive Kopplung zwischen Rotor und der Primärwicklung des Stators bzw. der Sekundärwicklung des Stators Signale auszutauschen. Dabei können die Signale sowohl zum Lenkrad hin gelangen, um beispielsweise einen Aktuator für einen Airbag auszulösen oder aber auch von dem Lenkrad weg geleitet werden, etwa um bei Betätigung. eines Hupkontaktes ein Steuersignal zu der chassisfest angeordneten Hupe zu bringen. Es ist somit notwendig, daß zum einen in Richtung Lenkrad in die Statorwicklung Steuersignale bzw. Steuerinformationen eingespeist bzw. in entgegengesetzter Richtung abgenommen werden. Von der mit der Lenksäule verbundenen Rotorwicklung werden dann die Steuersignale abgenommen und in einer Elektronikschaltung zur Steuerung am Lenkrad befindlicher Geräte weiterverarbeitet oder es werden entsprechende Signale vom Lenkrad kommend eingespeist, um chassisfest im Fahrzeug eingebaute Einrichtungen vom Lenkrad aus betätigen zu können.

Auf diese Weise ist aber nicht nur die Übertragung von Informationssignalen zur Ansteuerung von einzelnen Geräten, sondern auch die Energie zum Betrieb dieser mit dem Lenkrad verbundenen Umwandlungsschaltungen geeignet.

Wichtig ist allerdings entsprechend der Weiterbildung nach Anspruch 3, daß die einzelnen Signale sich nicht überschneiden oder gegenseitig stören. Die Erfindung schlägt daher entsprechend Anspruch 3 vor, die einzelnen Signale im zeitlichen Nacheinander über den Resolver zu übertragen oder für die zu übertragenden Signale getrennte Frequenz Kanäle vorzusehen. Dabei kann beispielsweise für die Drehwinkelmessung selbst eine Frequenz von 10 kHZ vorgesehen werden, während zur Übertragung der anderen Signale ein oberhalb dieser Frequenz liegendes Frequenzband verwendet werden kann. Auf diese Weise werden mehrere im Zeitmultiplex oder Frequenzmultiplex liegenden Kanäle im Resolver geschaffen, so daß er die unterschiedlichen weiter oben genannten Aufgaben störungsfrei erledigen kann. Auch eine Kombination dieser Maßnahmen ist möglich.

Als mit dem Lenkrad verbundene elektrische Einrichtung kommen verschiedene einzelne Einrichtungen wahlweise oder in Kombination in Betracht. So kann die Einrichtung beispielsweise einer Auslöseschaltung eines Airbag oder eine Steuerschaltung zur Einschaltung von elektrischen Geräten sein, wobei die elektrischen Geräte wiederum chassisfest im Fahrzeug untergebracht sein können, wie Autohupe, Radio oder Fahrzeugleuchten. Es lassen sich nach dem beschriebenen System also durch Schaltmaßnahmen am Lenkrad bedingte Steuersignale berührungslos und zuverlässig über die als Resolver ausgestaltete Drehwinkelmeßeinrichtung Steuersignale für unterschiedliche Geräte übertragen. Um nun die Filterschaltungen in ihrem Umfang zu begrenzen, ist es empfehlenswert, die Merkmalskombination nach Anspruch 5 in Fortbildung der Erfindung anzuwenden. Hierbei wird im Prinzip vorgeschlagen, den einzelnen Signalen nicht nur unterschiedliche Frequenzbänder zuzuordnen oder diese im Zeitmultiplex zueinander zu übertragen. Vielmehr wird vorgeschlagen, nur ein einziges Informationssignal zu verwenden, wobei dies allerdings codiert wird und durch die Codierung somit unterschiedliche Informationsinhalte übertragen kann. Dabei können die Informationssignale in beiden Richtungen übertragen bzw. ausgetauscht werden, also sowohl zum Lenkrad hin als auch von diesem zu chassisfesten Einrichtungen im Fahrzeug. Damit ist es auch möglich, unterschiedliche Informationen, die aus dem Informationsnetz des Fahrzeugs stammen (CAN), berührungsfrei zum Lenkrad hin zu übertragen und somit quasi eine CAN-Übertragungsstrecke und die Gegenrichtung zum Lenkrad hin zu schaffen.

Diese Codierung kann mit Hilfe von Zentralelektroniken geschehen, die am Eingang bzw. Ausgang der Statorwicklungen bzw, am Eingang bzw. Ausgang der Rotorwicklung angeordnet sind. Insbesondere können beispielsweise Informationen zum Zünden der Airbag-Zündpille dann übertragen werden, wenn die Sensoren des Fahrzeugs eine entsprechende Gefahrensituation festgestellt haben. Ein Ausführungsbeispiel der Erfindung wird nachfolgend anhand der Zeichnung erläutert. Darin zeigt:
- Fig. 1: den prinzipiellen Aufbau eines Resolvers,
- Fig. 2: in stark vereinfachter Darstellung den Aufbau der erfindungsgemäßen Meßeinrichtung mit zusätzlicher Übertragung von Informationssignalen,
- Fig. 3: eine vereinfachte Darstellung der Schaltung nach Fig. 2,
- Fig. 4: eine Prinzipskizze zur zeitmultiplexen Übertragung von Signalen und
- Fig. 5: eine Prinzipskizze zur frequenzmultiplexen Übertragung von Signalen bei der erfindungsgemäßen Meßeinrichtung.

Fig. 1 zeigt das Prinzip eines Resolvers. Dabei ist der Stator mit einer Primärwicklung 1 und zwei Hilfswicklungen bzw. Sekundärwicklungen 2,3 versehen, die in Form eines Transformators zusammengeschaltet sind. Für den Resolver besonders wichtig ist nun ein Rotor 4 mit einer Rotorwicklung 5. Die Stellung dieser Wicklung beeinflußt die Größe der Signale an der Sekundärwicklung 2,3, so daß aufgrund dieser Signale auf die Drehlage des Rotors 4 geschlossen werden kann. Die Wicklungen 2,3 sind zueinander um 90° gedreht, so daß die induzierten Spannungen jeweils dem Sinus- und dem Kosinuswert des Rotorwinkels entsprechen. Genauere Einzelheiten lassen sich dem 1994 erschienenen Prospekt der Firma Admotec Präzision AG, Küssnacht/Schweiz entnehmen, indem deren Rotor Rotasen detailliert beschrieben wird.

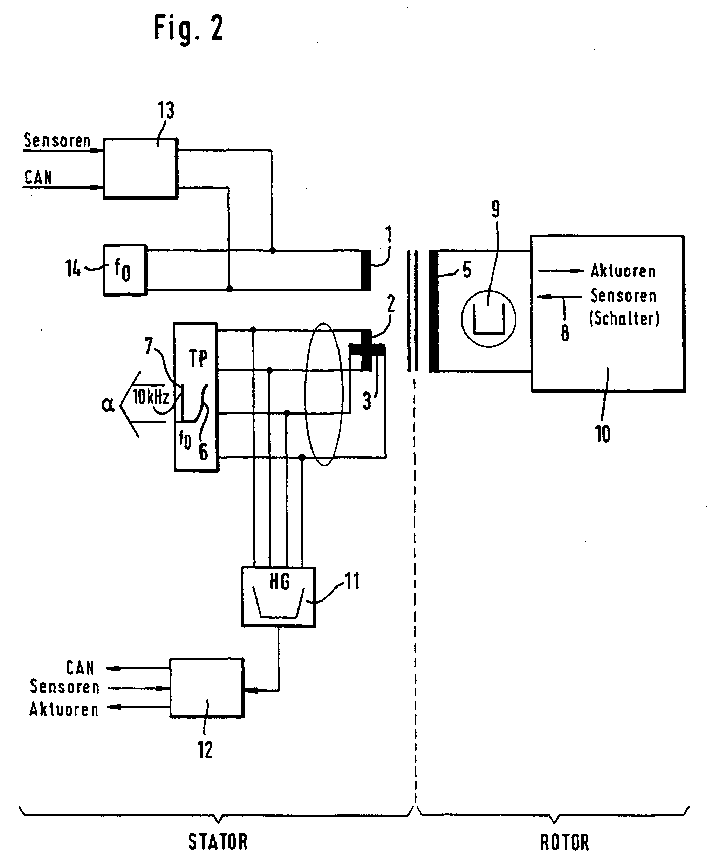

In Fig. 2 ist ein Prinzipschaltbild der erfindungsgemäßen Meßeinrichtung gezeigt, wobei wieder die in Fig. 1 aufgeführten Wicklungen in anderer Darstellung dargestellt sind. Zusätzlich zu der Darstellung nach Fig. 1 ist auch die Möglichkeit einer Signalübertragung zwischen der mit dem Lenkrad verbundenen Rotorspule 5 und den Statorwicklungen angedeutet. Diese Übertragung kann im Zeitmultiplex oder Frequenzmultiplex in beiden Richtungen geschehen. Zum einen ist gezeigt, wie aus den Hilfswicklungen 2 und 3 des Stators die Winkelinformation über den Drehwinkel α über eine in einem Tiefpaß 6 liegende Frequenz 7 von 10 kHZ ausgekoppelt wird. Zusätzlich zu diesen Informationen können aber auch vom Lenkrad kommende Informationen 8 in die Wicklung 5 eingespeist werden. Dies kann, wie durch den Bandpaß 9 angedeutet, mit Frequenzen geschehen, welche hinreichend außerhalb der Meßfrequenz 7 zur Drehwinkelmessung liegen. Als Lenkradinformation kann beispielsweise die Information eines Sensors am Lenkrad oder die Schalterstellung dienen, die in einer Lenkradelektronik in geeignete Frequenzsignale umgewandelt wird. Diese Signale lassen sich dann über die Wicklungen 2,3 des Stators und einen Bandpaß 11 sowie eine erste Statorelektronik 12 auskoppeln und entweder in das elektronische Netz CAN einspeisen oder direkt zur Auslösung von Aktuoren (Hupe, Blinker, Radio) einsetzen. In umgekehrter Richtung können über eine zweite Statorelektronik 13 Sensorinformationen oder Informationen aus dem Netz CAN in für den Bandpaß 9 geeignete Frequenzen umgesetzt werden, so daß diese Informationen über die Lenkradelektronik 10 verarbeitet und somit zur Betätigung geeigneter Aktuoren (z.B. Zündpille für Airbag) ausgewertet werden können.

In der Zeichnung ist noch ein Generator 14 gezeigt, der die für die Aktivierung des Resolvers notwendige Frequenz F0 in die Primärwicklung 1 einspeist, da diese Frequenz für die Drehwinkelmessung benötigt wird.

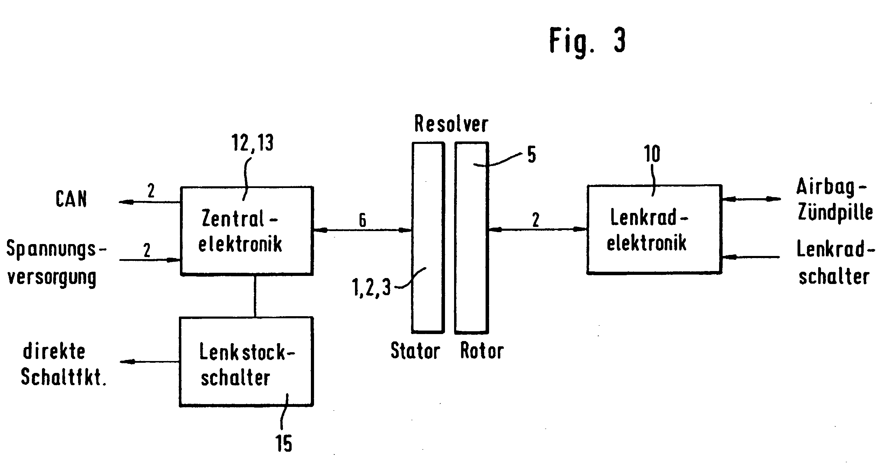

Fig. 3 zeigt noch eine weiter vereinfachte Darstellung der Zusammenhänge nach Fig. 2. Dabei ist zusätzlich zu dem nach Fig. 2 Dargestellten gezeigt, daß die Spannungsversorgung für die Lenkradelektronik 10 ebenfalls berührungslos über die Wicklungen 1 bis 5 des Resolvers zum Lenkrad hin übertragen werden kann. Außerdem sind noch ziffernmäßig die Anzahl der parallel geführten Leitungen angedeutet. Zusätzlich zu den Anwendungen nach Fig. 2 ist in Fig. 3 gezeigt, daß die Zentralelektronik und auch Teile des Resolvers selbst (Stator) in den Lenkstockschalter 15 integriert werden können. Über die Zentralelektronik können auch Schaltzustände des Lenkstockschalters 15 über den CAN-Bus den chassisfest angeordneten elektrischen Geräten übertragen werden.

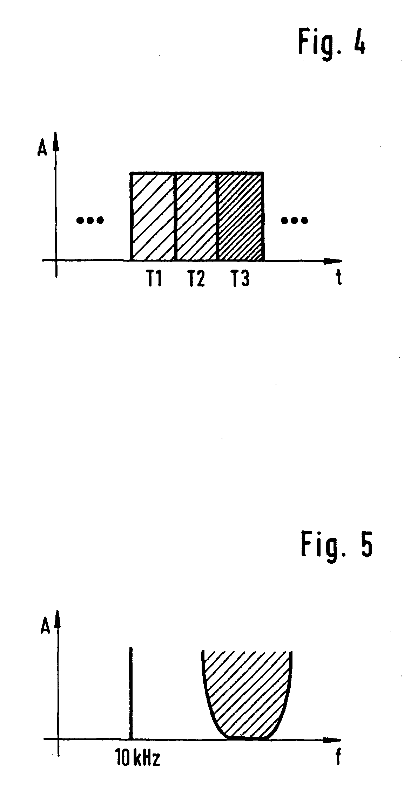

Fig. 4 deutet noch die Möglichkeit an, die Informationen zur Winkelerkennung (F0 = 10 kHZ) und die verbleibenden Schaltinformationen im Zeitmultiplex zu übertragen. Dabei ist durch die Größe A die Übertragung einer Information dargestellt, die innerhalb eines bestimmten Zeitraums t1, t2,t3 übertragen wird.

In Fig. 5 ist angedeutet, daß für die gesicherte Übertragung der Schaltinformationen ein im höheren Bereich der Frequenzen f arbeitender Bandpaß verwendet wird, während die Drehwinkelinformationen bei einer Frequenz von 10 kHZ bearbeitet werden.

## Patentansprüche

1. Meßeinrichtung zur Messung des Lenkwinkels α eines Fahrzeugs, dadurch **gekennzeichne**t, daß die Rotorwicklung (5) eines Resolvers mit der Lenksäule eines Fahrzeugs gekoppelt ist und die zur Bestimmung des Lenkwinkels dienenden Ausgangssignale des Resolvers an der ortsfesten Sekundärwicklung (2,3) des Resolvers abgegriffen werden.

2. Meßeinrichtung nach Anspruch 1, dadurch **gekennzeichnet**, daß mit dem Lenkrad eine elektrische Einrichtung verbunden ist, die von einer chassisfesten Stromquelle und/oder Steuereinrichtung mit Signalen zur Energieversorgung bzw. Betätigung versorgt wird oder welche derartige Signale abgibt und daß die Einrichtung mit Anschlüssen der Rotorwicklung des Resolvers verbunden ist.

3. Meßeinrichtung nach Anspruch 2, dadurch **gekennzeichnet,** daß die Einspeisesignale (f₀, 10 kHZ) zum Betrieb des Resolvers als zur Winkelmesser- (α) und/oder Betriebssignale zur Erzielung der Versorgungs- bzw. Betätigungssignale in die Primärwicklung (1) im Zeitmultiplex oder Frequenzmultiplex (parallel durch Filterschaltung (6,9,11)) voneinander getrennte Kanäle in die Primärwicklung (1) des Resolvers eingespeist werden.

4. Meßeinrichtung nach einem der Ansprüche 1 bis 3, dadurch **gekennzeichnet**, daß es sich bei der elektrischen Einrichtung um eine Auslöseschaltung eines Airbag oder Steuerschaltungen zur Einschaltung von elektrischen Geräten wie Autohupe, Radio oder Fahrzeugleuchten handelt.

5. Meßeinrichtung nach einem der vorangegangenen Ansprüche, dadurch **gekennzeichnet,** daß zur berührungslosen Übertragung von Steuersignalen zwischen Lenkrad und entsprechenden chassisfesten Geräten Codierschaltungen bzw. Decodierschaltungen vorgesehen sind, welche die über einen neben den Meßsignalen zu übertragenden, die entsprechende Betätigung auslösenden Informationssignale derart verschlüsseln bzw. entschlüsseln, daß über einen einzigen Kanal verschiedene Geräte betätigende Signale übertragbar sind.

## Claims

1. Measuring arrangement for the measurement of the vehicle steering angle α, characterized in that a rotor winding (5) of a resolver is coupled to the steering column of a vehicle, and that the output signals of the resolver serving to determine the steering angle are sensed at the spatially fixed secondary winding (2, 3) of the resolver.

2. Measuring arrangement according to Claim 1, characterized in that an electrical device connected to the steering wheel is supplied with signals for power supply or activation from a current source and/or control device fixed with respect to the chassis or which outputs signals of this type, and that said device is connected to terminals of the rotor winding of the resolver.

3. Measuring arrangement according to Claim 2, characterized in that the incoming signals (f₀, 10 kHz) for the operation of the resolver with respect to the angle measurement (α) and/or operating signals for realizing the supply of power or activation signals are supplied to the primary winding (1) of the resolver in separate channels in time-multiplexed or frequency-multiplexed fashion (parallel through filter circuit (6, 9, 11)) in the primary winding (1).

4. Measuring arrangement according to one of the Claims 1 to 3, characterized in that the electrical device is a trigger circuit for an air bag or control circuits for the connection of electrical devices such as auto horns, radios, or vehicle lights.

5. Measuring arrangement according to one of the preceding claims, characterized in that, for the contactless transmission of control signals between the steering wheel and corresponding devices fixed with respect to the chassis, coding circuits and decoding circuits are provided which code and decode, respectively, the information signal that triggers the corresponding activation and transmits the measurement signals together in such a way that signals activating different devices can be transmitted via a single channel.

## Revendications

1. Dispositif de mesure pour mesurer l'angle de braquage α d'un véhicule, caractérisé en ce que l'enroulement de rotor (5) d'un séparateur est couplé avec la colonne de direction d'un véhicule et les signaux de sortie du séparateur servant à déterminer l'angle de braquage sont prélevés sur l'enroulement secondaire (2, 3) fixe du séparateur.

2. Dispositif de mesure selon la revendication 1, caractérisé en ce qu'un dispositif électrique est connecté au volant de direction et est alimenté par une source de courant et/ou un dispositif de commande fixés au châssis en signaux d'alimentation en énergie ou de commande, ou délivre lesdits signaux, et en ce que le dispositif est raccordé à des connexions de l'enroulement du rotor du séparateur.

3. Dispositif de mesure selon la revendication 2, caractérisé en ce que les signaux acheminés (f₀, 10 kHz) pour l'exploitation du séparateur sont acheminés, comme signaux de mesure d'angle (α) et/ou d'exploitation, pour obtenir les signaux d'alimentation ou de commande dans l'enroulement primaire (1) en multiplexage temporel ou en multiplexage de fréquence (en parallèle par commutation de filtrage (6,9,11)) dans des canaux séparés l'un de l'autre de l'enroulement primaire (1) du séparateur.

4. Dispositif de mesure selon l'une quelconque des revendications 1 à 3, caractérisé en ce que le dispositif électrique est un circuit de déclenchement d'un cousin d'air gonflable ou des circuits de commande pour connecter des appareils électriques tels qu'un klaxon de voiture, une radio ou des feux de voiture.

5. Dispositif de mesure selon l'une quelconque des revendications précédentes, caractérisé en ce que sont prévus, pour le transfert sans contact de signaux de commande entre le volant de direction et des appareils correspondants fixés au châssis, des circuits de codage ou des circuits de décodage, qui codent ou décodent, à côté des signaux de mesure à transférer, les signaux d'informations déclenchant la commande correspondante, et en ce que des signaux commandant divers appareils peuvent être transférés par un seul canal.
